Europäisches Patentamt

European Patent Office

Office européen des brevets

(19)

(11) **EP 1 032 764 B1**

(12) **EUROPEAN PATENT SPECIFICATION**

(45) Date of publication and mention
of the grant of the patent:
**12.01.2005 Bulletin 2005/02**

(21) Application number: **98944399.9**

(22) Date of filing: **15.09.1998**

(51) Int Cl.$^7$: **F03B 13/22**, F03B 7/00

(86) International application number:
**PCT/SE1998/001640**

(87) International publication number:
**WO 1999/020896 (29.04.1999 Gazette 1999/17)**

(54) **METHOD AND ARRANGEMENT FOR CONVERTING KINETIC ENERGY OF OCEAN CURRENTS INTO ROTATORY ENERGY**

VERFAHREN UND VORRICHTUNG ZUM UMWANDELN VON KINETISCHER ENERGIE VON MEERESSTRÖMUNGEN IN ROTATIONSENERGIE

PROCEDE ET CONFIGURATION PERMETTANT DE CONVERTIR DE L'ENERGIE CINETIQUE DE COURANTS MARINS EN ENERGIE DE ROTATION

(84) Designated Contracting States:
**DK ES FR GB IE PT**

(30) Priority: **22.10.1997 SE 9703852**

(43) Date of publication of application:
**06.09.2000 Bulletin 2000/36**

(73) Proprietor: **Lagström, Göran Emil
S-112 64 Stockholm (SE)**

(72) Inventor: **Lagström, Göran Emil
S-112 64 Stockholm (SE)**

(74) Representative: **Winblad, Hans Peter
Albihns Stockholm AB,
Box 5581
114 85 Stockholm (SE)**

(56) References cited:
**GB-A- 2 119 449       US-A- 604 211**

## Description

The present invention relates to a method of converting the kinetic energy of ocean currents into rotatory energy with the help of a so-called Savonius type turbine, and to use this energy for driving a rotary machine, such as primarily an electric generator.

The Savonius turbine has earlier only been used in small wind turbines having electric generators of up to 1kW, the reason being that at high wind speeds it is subjected to high flexural stresses, for which a large turbine cannot be dimensioned if it is to be capable of producing electric energy at a competitive price per kWh at average wind speeds.

In Sweden, the average wind speed is approx. 6 m/s, but during extreme conditions it can amount to more than 45 m/s.

The Savonius turbine cannot be protected against high wind speeds by means of feathering, as is the case in air screw turbines, and it has only approx. 50% of the efficiency of such a turbine. It is advantageous, however, in that it is cheap to manufacture, rotates in the same direction regardless of the direction of the wind and will start already at less than 1 m/s, as compared to 3-4 m/s for an air screw turbine.

If the Savonius turbine is provided with an electric generator, an electric power is produced amounting to

$$Pel = 0{,}12 \times S \times B \times H \times v^3,$$

S being the density of air = 1,3 kg/cu.m., H the height of the turbine in m, B its width in m and v the wind speed in m/s.

The flexural stress is proportional to the square of the wind speed and will be, for the above-mentioned speeds, $45^2$: $6^2$ = 56,25 times larger at 45 m/s than at 6 m/s.

In ocean currents, the conditions are totally different and more advantageous, as the variations in speed are much smaller. Even for tidal flows, the speed variations are very far from being as large as in the case of wind speeds. Therefore, a Savonius type turbine can, to an advantage, be used as a hydraulic turbine in ocean currents to convert their kinetic energy into rotatory energy.

US-A-604,211 discloses an arrangement of stationary mounted, turbine-like units submerged into water and connected to a common power transmitting shaft. This arrangement is not intended or suitable to be anchored to a floating buoy at see and to be able to be inclined due to increased water current speeds.

It is thus possible, in ocean currents, to produce environmentally compatible energy at a very competitive price in comparison with other types of energy. The density of water being S = 1000 kg/cu.m., Pel = 0,12 x 1000 x B x H x $v^3$ Watt.

The way of using a Savonius turbine in accordance with the present invention also makes it possible to obtain a kind of feathering effect on the turbine, so that neither the turbine, nor its electric generator runs a risk of being overloaded.

This advantageous way of using a Savonius turbine in ocean currents and of protecting the turbine and the electric generator from being overloaded has been achieved with the method in accordance with the present invention as it is defined in Claim 1.

The present invention also relates to an arrangement for carrying out the inventive method. The main features of the arrangement are defined in the independent claim 7.

The invention is described in the following with reference to Figs. 1-7.

Fig. 1 is a schematic side view, partly in section, of a power plant in accordance with the invention.

Fig. 2 is a schematic end view showing the turbine of the plant.

Fig. 3 shows, schematically, from above, an arrangement of 10 power plant units with electric cables leading to a central unit.

Fig. 4 shows, schematically, from above, a power plant unit and its anchoring arrangement.

Figs. 5-7 show, schematically, from above, different arrangements of a number of turbines suspended from a common buoy or pontoon.

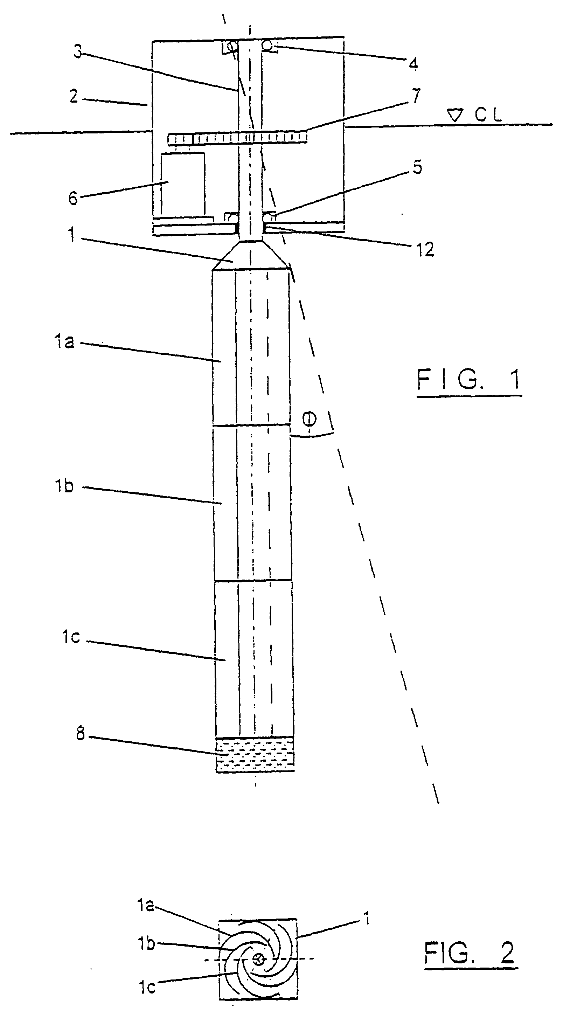

A Savonius type turbine 1 (Fig. 1) is journalled watertight with the help of seal rings or the like 12 in a floating buoy 2 with the help of a shaft 3, a ball bearing 5 and a conical bearing 4.

The turbine 1 is preferably made with three rotor units 1a -1c, one below the other and displaced 120° in relation to each other in order not to cause a turning moment which varies too much, corresponding to the relationship in a 3-phase electric motor relative to a single-phase motor.

The rotor units 1a-1c with partition walls are preferably made of high-grade sheet steel painted with a thick coat of a multi-component paint which also protects against on-growth of marine organisms.

In the buoy 2, an electric generator 6, such as a three-phase alternating current generator, is provided which is preferably driven via some type of step-up transmission, for example a gear mechanism 7. The turbine 1 is fitted with a counterweight 8 at its bottom, which together with the turbine's own weight is so dimensioned that when the speed of the ocean current temporarily exceeds the normal speed, the turbine will not be suspended substantially vertically from the buoy but will take up a more oblique position, the angle of which increases in relation to the increase of the speed of the current. A reduced area of the turbine blades is hereby exposed to the water current, and the water will act on the turbine at an oblique, less efficient angle than the normal one. This reduces the flexural stresses as well as the loading of the generator and will have an effect corresponding to that of feathering.

If the turbine is swung out to $\varphi$ degrees, for example, the effect of the generator will be proportional to $\cos^3\varphi$ and the flexural stress proportional to $\cos^2\varphi$. In this way, a reliable, simple, robust and fully automatic overload protection is obtained.

The counterweight 8 can be made, for example, as a sand-filled box or a lump of concrete.

The rotary energy produced by the turbine can also be used for other applications, for example to drive a pump in order to pump water over sorbents which extract valuable ions from the sea water.

In the following example, the produced electric effect Pel is calculated for a Savonius turbine with the height H = 12 m and the width B = 4 m in a 5-knot ocean current.

5 knots correspond to 5 nautical miles/h = 5 x 1852 : 3600 = 2,572 m/s.

$$\text{Pel} = 0,12 \times 1000 \times 12 \times 4 \times 2,572^3 = 98000 \text{ W} = 98 \text{ kW.}$$

$$\text{At 7 knots, Pel} = 7^3 : 5^3 \times 98 \text{ kW} = 250 \text{ kW.}$$

Current speeds equal to those stated above and even higher are found in large ocean areas on our planet. Tidal flow speeds of up to 15 knots can be found in narrow straits and at river mouths, which makes it possible to produce electric energy at an especially low price per kWh.

Ocean currents often pass close to shores and can therefore be utilized without any requirement for long and, thereby, expensive electric cables on the bottom of the sea for taking the electric current ashore.

The electric current produced will usually show variations in frequency. With the help of known power electronics and a transformer, however, these can be eliminated and a suitable frequency and voltage obtained in order to avoid too great landing losses, whereupon the current can again, on shore, be transformed into a voltage suitable for new or existing supply networks.

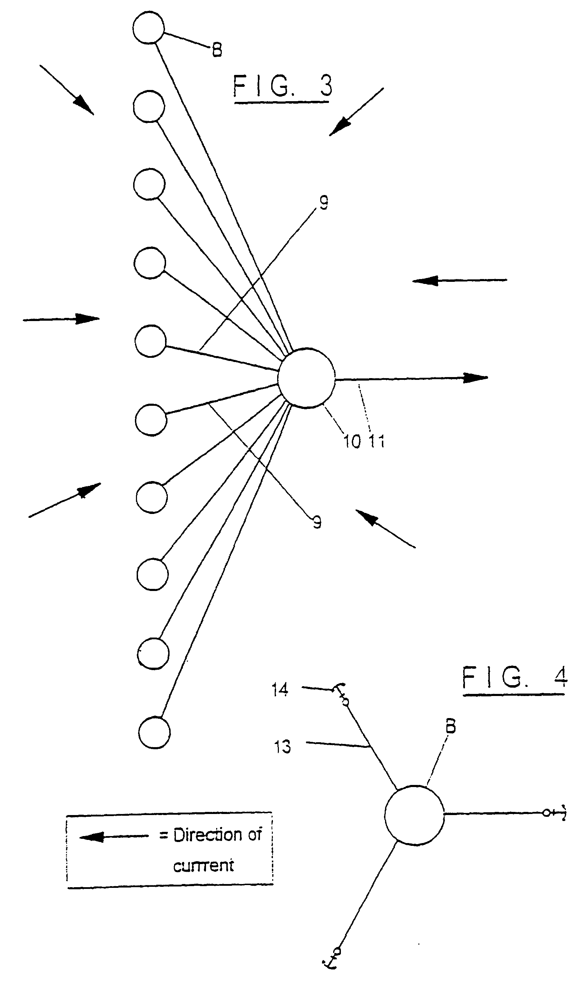

A large power plant can be built consisting of, for example, ten separate buoy power stations designated B (see Fig. 3), each having a capacity in accordance with the example given above. In such a case, each buoy station B is connected by electric cables 9 to a common central buoy station 10 provided with suitable equipment, such as circuit breakers and disconnectors, transformer and protective relays, in a way known per se. From this central buoy, a common cable 11 running along the bottom of the sea connects with land.

The ten buoy power stations are arranged in a straight line or in some other optimized configuration, depending on the normal variations of the direction of the ocean current, so that they do not "steal" kinetic energy from each other. The individual buoys are anchored, preferably with the help of three anchor chains 13 with anchors 14 (Fig. 4) displaced 120° in relation to each other, so that the buoys cannot rotate with the turbine. The central buoy station 10 is also anchored in a similar way, not shown.

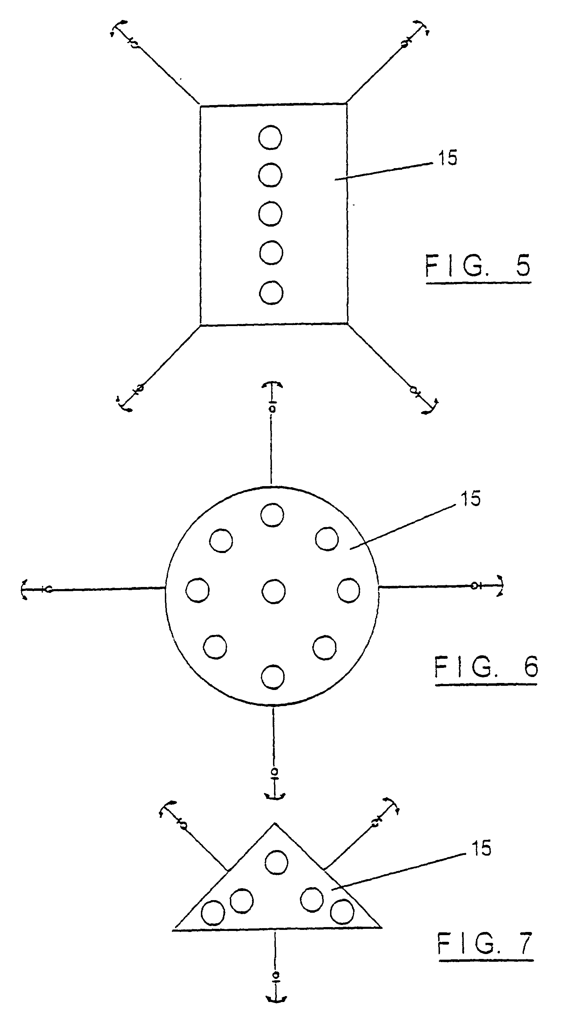

If the ocean current varies little in direction, or with 180° displacement - which is often the case with tidal flows - it can be suitable to place the turbines in a common buoy or pontoon 15, as shown from Figs. 5 -7 which show examples of possible configurations.

The buoys or pontoons should be fitted with a top-light and proper lighting in accordance with prevailing regulations.

**Claims**

**1.** A method of converting kinetic energy of ocean currents into rotatory energy, comprising the steps of achoring at least one turbine (1) of a so-called Savonius type extending downwards and substantially vertically from a buoy (2) in such a way in an ocean current that it cannot rotate with said turbine (1), a shaft (3) of said turbine being rotatably journalled in said buoy (2) and arranged to drive a rotary machine (6), and attaching at the bottom end of said turbine (1) a counterweight (8) which, together with said turbine's (1) own weight, is dimensioned to retain said turbine (1) in said substantially vertical position at a normal speed of the ocean current but to permit said turbine (1) to assume a suitable angle of inclination ($\varphi$) when subjected to temporarily increased current speeds, thereby protecting said turbine (1) from harmful flexural stresses and protecting said rotary machine (6) from being overloaded.

2. A method in accordance with Claim 1, **characterized by** arrranging in each said turbine (1) a plurality of rotor units (1a -1c) located one below the other on said shaft (3) and displaced evenly in relation to each other around the circumference of said shaft (3).

3. A method in accordance with any of Claims 1-2, **characterized by** converting with the help of power electronics the electric current produced, when each turbine (1) is used to drive an electric generator (6), into a suitable frequency and voltage.

4. A method in accordance with any of Claims 1-3, **characterized by** achoring a plurality of power producing units (B) comprised of said buoy (2) with turbine (1) to form a group and feeding, by cables (9), the electric current produced to a collecting buoy (10) and from there, with the help of a cable (11), to the shore.

5. A method in accordance with Claim 4, **characterized by** achoring said power producing units (B) comprising said buoys (2) with turbines (1) in such a way that none of them obstructs the flow of the ocean current's kinetic energy to another unit.

6. A method in accordance with any of Claims 1-3, **characterized by**, in the case the ocean current varies little in direction, or always varies mainly by 180°, arranging a desired number of said turbines (1) with electric generators (6) and other equipment required in a suitable configuration, in a common, large buoy or pontoon (15).

7. An arrangement for converting kinetic energy of ocean currents into rotatory energy, wherein at least one turbine (1) of a so-called Savonius type is arranged to extend downwards and substantially vertically from a buoy (2) adapted to be non-rotatably anchored in an ocean current, a shaft (3) of said turbine being rotatably journalled in said buoy (2) and arranged to drive a rotary machine (6), and wherein, at the bottom end of said turbine (1), a counterweight (8) is provided which, together with said turbine's (1) own weight, is dimensioned to retain said turbine (1) in said substantially vertical position at normal speed of the ocean current but to permit said turbine (1) to assume a suitable angle of inclination (φ) when subjected to temporarily increased current speeds, thereby protecting said turbine (1) from harmful flexural stresses and protecting said rotary machine (6) from being overloaded.

8. An arrangement in accordance with Claim 7, **characterized in that** said turbine (1) is fitted with a plurality of rotor units (1a -1c) arranged one below the other on said shaft (3) and displaced evenly in relation to each other around the circumference of said shaft (3).

9. An arrangement in accordance with Claim 7 or 8, **characterized in that** a plurality of power producing units (B) formed by said buoys (2) and turbines (1) are anchored to form a group, and that cables (9) are adapted to feed electric current produced by said units (B) to a collecting buoy (10) and from there with the help of a cable (11), to the shore.

10. An arrangement in accordance with anyone of Claims 7-9, **characterized in that** a plurality of said turbines (1) with electric generators (6) are arranged, in a suitable configuration, in a common, large buoy or pontoon (15).

**Patentansprüche**

1. Verfahren zum Umwandeln kinetischer Energie von Meeresströmungen in Rotationsenergie mit folgenden Schritten: Verankern wenigstens einer Turbine (1) des sogenannten Savonius-Typs, die sich von einer Boje (2) im wesentlichen vertikal nach unten derart in einer Meeresströmung erstreckt, dass diese sich nicht mit der Turbine (1) drehen kann, wobei eine Welle (3) der Turbine, die in der Boje (2) drehbar gelagert und so angeordnet ist, dass sie eine Rotationsmaschine (6) antreibt, und Befestigen eines Gegengewichts (8) am Boden der Turbine (1), das so dimensioniert ist, dass es, zusammen mit dem Eigengewicht der Turbine (1), die Turbine (1) bei normaler Geschwindigkeit der Meeresströmung in der im wesentlichen vertikalen Stellung hält, es jedoch der Turbine (1) erlaubt, einen geeigneten Neigungswinkel (φ) einzunehmen, wenn sie zeitweise erhöhten Strömungsgeschwindigkeiten ausgesetzt ist, so dass die Turbine (1) vor schädlichen Biegespannungen und die Rotationsmaschine (6) vor Überlastungen geschützt wird.

2. Verfahren nach Anspruch 1, **gekennzeichnet durch** Anordnen einer Vielzahl von Rotoreinheiten (1a-1c) in jeder Turbine (1), die auf der Welle (3) untereinanderliegend angeordnet und in Bezug zueinander gleichmäßig um den Umfang der Welle (3) herum verteilt sind.

3. Verfahren nach Anspruch 1 oder 2, **gekennzeichnet durch** Umwandeln des erzeugten elektrischen Stroms in geeignete Frequenz und Spannung mit Hilfe von Leistungselektronik, wobei jede Turbine (1) zum Antrieb eines elektrischen Generators (6) verwendet wird.

4. Verfahren nach einem der Ansprüche 1 bis 3, **gekennzeichnet durch** Verankern einer Vielzahl von Stromerzeugungseinheiten (B), die aus der Boje (2) mit der Turbine (1) bestehen, zur Bildung einer Gruppe, und **durch** Leiten des erzeugten Stroms mittels Kabeln (9) an eine Sammelboje (10) und von dort, mit Hilfe eines Kabels (11), zur Küste.

5. Verfahren nach Anspruch 4, **gekennzeichnet durch** Verankern der Stromerzeugungseinheiten (B), die aus den Bojen (2) mit den Turbinen (1) bestehen, derart, dass keine von ihnen den Fluss der kinetischen Energie der Meeresströmung zu einer anderen Einheit behindert.

6. Verfahren nach einem der Ansprüche 1 bis 3, **gekennzeichnet durch** Anordnen, falls sich Richtung der Meeresströmung geringfügig ändert oder stets hauptsächlich um 180° variiert, einer gewünschten Anzahl von Turbinen (1) mit elektrischen Generatoren (6) und weiterer in einer geeigneten Konfiguration benötigter Ausrüstung in einer gemeinsamen, großen Boje oder einem Ponton (15).

7. Vorrichtung zum Umwandeln kinetischer Energie von Meeresströmungen in Rotationsenergie, wobei wenigstens eine Turbine (1) des sogenannten Savonius-Typs so angeordnet ist, dass sie sich von einer Boje (2), die undrehbar in einer Meeresströmung verändert werden kann, im wesentlichen vertikal nach unten erstreckt, wobei eine Welle (3) der Turbine in der Boje (2) drehbar gelagert und so angeordnet ist, dass sie eine Rotationsmaschine (6) antreibt, und wobei ein Gegengewicht (8) am Boden der Turbine (1) vorgesehen ist, das so dimensioniert ist, dass es, zusammen mit dem Eigengewicht der Turbine (1), die Turbine (1) bei normaler Geschwindigkeit der Meeresströmung in der im wesentlichen vertikalen Stellung hält, es jedoch der Turbine (1) erlaubt, einen geeigneten Neigungswinkel ($\varphi$) einzunehmen, wenn sie zeitweise erhöhten Strömungsgeschwindigkeiten ausgesetzt ist, so dass die Turbine (1) vor schädlichen Biegespannungen und die Rotationsmaschine (6) vor Überlastungen geschützt wird.

8. Vorrichtung nach Anspruch 7, **dadurch gekennzeichnet, dass** die Turbine (1) mit einer Vielzahl von Rotoreinheiten (1a-1c) ausgestattet ist, die sich untereinanderliegend auf der Welle (3) befinden und in Bezug zueinander gleichmäßig um den Umfang der Welle (3) herum verteilt sind.

9. Vorrichtung nach Anspruch 7 oder 8, **dadurch gekennzeichnet, dass** eine Vielzahl von Stromerzeugungseinheiten (B), die aus den Bojen (2) und Turbinen (1) bestehen, zur Bildung einer Gruppe verankert sind, und dass Kabel (9) elektrischen Strom, der von den Einheiten (B) erzeugt wird, an eine Sammelboje (10) und von dort, mit Hilfe eines Kabels (11), zur Küste leiten können.

10. Vorrichtung nach einem der Ansprüche 7 bis 9, **dadurch gekennzeichnet, dass** eine Vielzahl von Turbinen (1) mit elektrischen Generatoren (6) in geeigneter Konfiguration in einer gemeinsamen, großen Boje oder einem Ponton (15) angeordnet sind.

**Revendications**

1. Une méthode pour convertir l'énergie cinétique de courants océaniques en énergie rotatoire, comportant les étapes d'ancrage d'au moins une turbine (1) d'un type soi-disant Savonius qui s'étend vers le bas et substantiellement verticalement à partir d'une bouée (2) de telle manière que dans un courant océanique elle ne puisse pas pivoter avec ladite turbine (1), un axe (3) de ladite turbine étant rotativement retenu dans ladite bouée (2) et aménagé pour commander une machine rotatoire (6), et de fixation à l'extrémité inférieure de ladite turbine (1) d'un contrepoids (8) lequel, combiné au propre poids de ladite turbine (1), est dimensionné pour retenir ladite turbine (1) dans ladite position subtantiellement verticale à une vitesse normale du courant océanique mais pour permettre à ladite turbine (1) d'assumer un angle adéquat d'inclination ($\varphi$) lorsqu'elle est soumise à des vitesses de courant temporairement accrues, protégeant ainsi ladite turbine (1) contre des contraintes dangereuses de flexion et empêchant ladite machine rotatoire (6) d'être surchargée.

2. Une méthode selon la revendication 1, **caractérisée par** l'aménagement dans chaque dite turbine (1) d'une pluralité d'éléments rotors (1a-1c) situés l'un en dessous de l'autre sur ledit axe (3) et dispersés également l'un relativement à l'autre autour de la circonférence dudit axe (3).

3. Une méthode selon l'une quelconque des revendications 1-2, **caractérisée par** la conversion à l'aide de l'électronique de puissance du courant électrique produit, lorsque chaque turbine (1) est utilisée pour commander un générateur électrique (6), à une fréquence et un voltage adéquats.

4. Une méthode selon l'une quelconque des revendications 1-3, **caractérisée par** l'ancrage d'une pluralité d'éléments producteurs de puissance (B) comportant ladite bouée (2) avec turbine (1) pour former un groupe et alimenter, par cables (9), le courant électrique produit jusqu'à une bouée collectrice (10) et à partir de là, à l'aide d'un cable (11), jusqu'au rivage.

5. Une méthode selon la revendication 4, **caractérisée par** l'ancrage desdits éléments producteurs de puissance (B) comportant lesdites bouées (2) avec turbines (1) d'une telle manière qu'aucun d'eux n'obstrue la circulation d'énergie cinétique du courant océanique vers un autre élément.

6. Une méthode selon l'une quelconque des revendications 1-3, **caractérisée par**, dans le cas où le courant océanique varie légèrement en direction, ou varie toujours principalement de 180°, l'aménagement d'un nombre désiré desdites turbines (1) avec générateurs électriques (6) et autre équipement requis en une configuration adéquate, dans une large bouée ou un ponton communs (15).

7. Un dispositif pour convertir l'énergie cinétique de courants océaniques en énergie rotatoire, dans lequel au moins une turbine (1) d'un type soi-disant Savonius est aménagée pour s'étendre vers le bas et substantiellement verticalement à partir d'une bouée (2) adaptée pour être ancrée de façon non-rotative dans un courant océanique, un axe (3) de ladite turbine étant rotativement retenu dans ladite bouée (2) et aménagé pour commander une machine rotatoire (6), et dans lequel à l'extrémité inférieure de ladite turbine (1), un contrepoids (8) est pourvu lequel, combiné au propre poids de ladite turbine (1), est dimensionné pour retenir ladite turbine (1) dans une position subtantiellement verticale à une vitesse normale du courant océanique mais pour permettre à ladite turbine (1) d'assumer un angle adéquat d'inclination (φ) lorsqu'elle est soumise à des vitesses de courant temporairement accrues, protégeant ainsi ladite turbine (1) contre des contraintes dangeureuses de flexion et empêchant ladite machine rotatoire (6) d'être surchargée.

8. Un dispositif selon la revendication 7, **caractérisé en ce que** ladite turbine (1) est ajustée avec une pluralité d'éléments rotors (1a-1c) situés l'un en dessous de l'autre sur ledit axe (3) et dispersés également l'un relativement à l'autre autour de la circonférence dudit axe (3).

9. Un dispositif selon la revendication 7 ou 8, **caractérisé en ce qu'**une pluralité d'éléments producteurs de puissance (B) formés desdites bouées (2) et turbines (1) sont ancrés pour former un groupe, et **en ce que** des cables (9) sont adaptés pour alimenter le courant électrique produit par lesdits éléments (B) jusqu'à une bouée collectrice (10) et à partir de là à l'aide d'un cable (11), jusqu'au rivage.

10. Un dispositif selon l'une quelconque des revendications 7-9, **caractérisé en ce qu'**une pluralité desdites turbines (1) avec générateurs électriques (6) sont aménagées, en une configuration adéquate, dans une large bouée ou un ponton communs (15).

FIG. 1

FIG. 2

FIG. 3

8

9

10 11

9

FIG. 4

14

13

8

= Direction of current

FIG. 5

15

FIG. 6

15

FIG. 7

15